# EUROPÄISCHE PATENTSCHRIFT

(11) **EP 3 332 396 B1**
(45) Veröffentlichungstag und Bekanntmachung des Hinweises auf die Patenterteilung: **04.09.2024**
(21) Anmeldenummer: 16729578.1
(22) Anmeldetag: 16.06.2016
(51) Int. Cl.: G01S 5/08, H04W 4/029, G08G 1/01, G08G 1/00, G08G 1/017, H04W 4/02, G01S 5/02

(54) **VERFAHREN UND SYSTEM ZUM LOKALISIEREN EINES SICH INNERHALB EINES PARKPLATZES BEFINDENDEN FAHRZEUGS**
METHOD AND SYSTEM FOR LOCATING A VEHICLE LOCATED WITHIN A PARKING AREA
PROCÉDÉ ET SYSTÈME DE LOCALISATION D'UN VÉHICULE SE TROUVANT À L'INTÉRIEUR D'UN PARC DE STATIONNEMENT

(30) Priorität: 04.08.2015 DE 102015214826
(43) Veröffentlichungstag der Anmeldung: 13.06.2018
(73) Patentinhaber: Robert Bosch GmbH, 70442 Stuttgart (DE)
(72) Erfinder: NORDBRUCH, Stefan, 70806 Kornwestheim (DE); QUAST, Gerrit, 72622 Nuertingen (DE)
(86) Internationale Anmeldenummer: PCT/EP2016/063872
(87) Internationale Veröffentlichungsnummer: WO 2017/021049

(56) Entgegenhaltungen:
- DE-A1- 102007 051 961
- DE-A1- 102007 051 961
- US-A1- 2002 196 161
- US-A1- 2002 196 161
- US-A1- 2005 105 600
- US-A1- 2007 132 577
- US-A1- 2007 178 911
- US-A1- 2008 204 322
- US-A1- 2008 204 322
- US-A1- 2011 117 272

## Beschreibung

Die Erfindung betrifft ein Verfahren und ein System zum Lokalisieren eines sich innerhalb eines Parkplatzes befindenden Fahrzeugs unter Verwendung von mehreren jeweils ein Antennenarray umfassende WLAN-Basisstationen. Die Erfindung betrifft ferner einen Parkplatz für Fahrzeuge sowie ein Computerprogramm.

### Stand der Technik

Die Offenlegungsschrift DE 10 2007 051 961 A1 zeigt eine Einrichtung zum Überwachen von sich in einem ausgezeichneten Bereich, insbesondere einem Werksgelände oder einem Parkhaus, befindlichen Fahrzeugen.

Die Offenlegungsschrift DE 10 2012 222 562 A1 zeigt ein System für bewirtschaftete Parkflächen zur Überführung eines Fahrzeugs von einer Startposition in eine Zielposition.

Bei einem vollautomatisierten (autonomen) sogenannten Valet Parking wird ein Fahrzeug von seinem Fahrer auf einer Abgabestelle, zum Beispiel vor einem Parkhaus geparkt und von da fährt das Fahrzeug selber in eine Parkposition/Parkbucht und wieder zurück zur Abgabestelle.

Für das so genannte Valet Parking ist es wichtig, dass das Fahrzeug möglichst genau innerhalb des Parkhauses, allgemein des Parkplatzes, lokalisiert werden kann.

### Offenbarung der Erfindung

Die der Erfindung zugrundeliegende Aufgabe ist darin zu sehen, ein effizientes Konzept bereitzustellen, mittels welchem ein sich innerhalb eines Parkplatzes befindendes Fahrzeug effizient lokalisiert werden kann.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Lokalisieren eines sich innerhalb eines Parkplatzes befindenden Fahrzeugs unter Verwendung von mehreren jeweils ein Antennenarray umfassende WLAN-Basisstationen bereitgestellt, wobei das Fahrzeug eine Kommunikationsschnittstelle zur Kommunikation mit den WLAN-Basisstationen über ein drahtloses WLAN-Kommunikationsnetzwerk umfasst, wobei das Verfahren die folgenden Schritte umfasst:
- Empfangen mittels des jeweiligen Antennenarrays eines mittels der Kommunikationsschnittstelle des Fahrzeugs über das drahtlose Kommunikationsnetzwerk gesendeten Radiosignals,
- Ermitteln eines jeweiligen Einfallswinkels des jeweiligen empfangenen Radio-signals relativ zu einer jeweiligen Normalen des Antennenarrays,
- Ermitteln einer Signalintensität des jeweiligen empfangenen Radio-Signals,
- Durchführen einer Triangulation unter Verwendung der ermittelten Einfallswinkel und der ermittelten Signalintensitäten, um das Fahrzeug innerhalb des Parkplatzes zu lokalisieren.

Nach einem anderen Aspekt wird ein System zum Lokalisieren eines sich innerhalb eines Parkplatzes befindenden Fahrzeugs bereitgestellt, wobei das Fahrzeug eine Kommunikationsschnittstelle zur Kommunikation mit WLAN-Basisstationen über ein drahtloses WLAN-Kommunikationsnetzwerk umfasst, umfassend:
- mehrere jeweils ein Antennenarray umfassende WLAN-Basisstationen zum Empfangen mittels des jeweiligen Antennenarrays eines mittels der Kommunikationsschnittstelle des Fahrzeugs über das drahtlose WLAN-Kommunikationsnetzwerk gesendeten Radiosignals,
- eine Ermittlungseinrichtung zum Ermitteln eines Einfallwinkels des jeweiligen empfangenen Radiosignals relativ einer jeweiligen Normalen des Antennenarrays und zum Ermitteln einer Signalintensität des jeweiligen empfangenen Radiosignals und
- eine Lokalisierungseinrichtung zum Durchführen einer Triangulation unter Verwendung der ermittelten Einfallswinkel und der ermittelten Signalintensitäten, um das Fahrzeug innerhalb des Parkplatzes zu lokalisieren.

Gemäß einem weiteren Aspekt wird ein Parkplatz für Fahrzeuge bereitgestellt, umfassend das System zum Lokalisieren eines sich innerhalb eines Parkplatzes befindenden Fahrzeugs.

Nach noch einem Aspekt wird ein Computerprogramm bereitgestellt, welches Programmcode zur Durchführung des Verfahrens zum Lokalisieren eines sich innerhalb eines Parkplatzes befindenden Fahrzeugs umfasst, wenn das Computerprogramm auf einem Computer ausgeführt wird.

Die Erfindung umfasst also insbesondere und unter anderem den Gedanken, das Fahrzeug basierend auf zwei Lokalisierungsverfahren oder Lokalisierungstechniken innerhalb des Parkplatzes zu lokalisieren. Zum einen die sogenannte "Angle of Arrival"-Lokalisierungstechnik. Der feststehende Begriff "Angle of Arrival" bezeichnet den Einfallswinkel des Radiosignals relativ zur Normalen des Antennenarrays. Das heißt also, dass relativ zur Basisstation eine Richtung ermittelt wird, aus welcher das Radiosignal gesendet wurde, im vorliegenden Fall also vom Fahrzeug.

Zum anderen wird die sogenannte "Received Signal Strength"- Lokalisierungstechnik verwendet. Der feststehende Begriff "Received Signal Strength" steht für empfangene Signalstärke, also die empfangene Signalintensität. Anhand dieser kann insbesondere eine Abschätzung einer Distanz zwischen Basisstation und Fahrzeug ermittelt werden. Denn mit zunehmender Distanz zwischen dem Fahrzeug und der Basisstation nimmt eine Dämpfung des Radiosignals zu, was dann wiederum zu einer geringeren Signalstärke führt. Eine Dämpfung, wie sie üblicherweise innerhalb des Parkplatzes vorliegt, kann zum Beispiel im Vorfeld messtechnisch ermittelt werden. Zum Beispiel können Radiosignale von bekannten Abständen zur Basisstation mit bekannter Sendeleistung ausgesandt werden. Somit sind die ausgesendete Sendeleistung und die empfangene Signalstärke bekannt. Hieraus kann dann eine Dämpfung ermittelt werden. Somit ist die Dämpfung bekannt. Somit kann dann bei nicht bekannter Sendeleistung zumindest abgeschätzt werden, wie weit sich das Fahrzeug von der WLAN-Basisstation befindet. Die Sendeleistung des Radiosignals wird nach einer Ausführungsform vom Fahrzeug über seine Kommunikationsschnittstelle mitgesendet. Zum Beispiel ist vorgesehen, dass das Radiosignals die Information betreffend die Sendeleistung umfasst. Das heißt, dass zum Beispiel entsprechend die Sendeleistung des ausgesendeten Radiosignals empfangen wird.

Das Abschätzen oder Ermitteln der Distanz zwischen Fahrzeug und WLAN-Basisstation umfasst nach einer Ausführungsform dass basierend auf der gemessenen Signalintensität eine Signalleistung ermittelt wird. Da es sich hier um das empfangene Signal handelt, wird also nach einer Ausführungsform eine Empfangsleistung bestimmt oder ermittelt.

Jedes dieser Verfahren oder jeder dieser Techniken für sich mag zwar eine gewisse Ungenauigkeit aufweisen. Doch durch die Verwendung beider Lokalisierungstechniken kann in vorteilhafter Weise eine Lokalisierungsgenauigkeit effizient erhöht werden. Zum Beispiel können die mittels der zwei Lokalisierungstechniken jeweils bestimmten Positionen des Fahrzeugs gegeneinander plausibilisiert und/oder abgeglichen werden.

Die Erfindung beruht also auf dem Gedanken, zwei Lokalisierungstechniken, die Angle of Arrival-Lokalisierungstechnik und die Received Signal Strength-Lokalisierungstechnik, zu verwenden, um das Fahrzeug innerhalb des Parkplatzes lokalisieren zu können.

Der Begriff "WLAN" steht für "Wireless Lokal Area Network", also drahtloses lokales Netzwerk. Im Sinne dieser Erfindung handelt es sich bei einem WLAN-Kommunikationsnetzwerk um ein Kommunikationsnetzwerk gemäß dem Standard IEEE-802.11, insbesondere inklusive dessen Erweiterungen, zum Beispiel 802.11a.

Ein Antennenarray im Sinne dieser Erfindung umfasst mehrere Antennen, die jeweils ausgebildet sind, Radiosignale zu empfangen respektive auszusenden. Die Formulierung "respektive" im Sinne dieser Erfindung umfasst die Formulierung "und/oder".

Radiosignale im Sinne dieser Erfindung bezeichnen WLAN-Radiosignale.

Durch die Verwendung der zwei Lokalisierungstechniken kann das Fahrzeug effizient innerhalb des Parkplatzes lokalisiert werden. Das heißt, dass basierend auf der Triangulation das Fahrzeug innerhalb des Parkplatzes lokalisiert wird.

Das Lokalisieren umfasst nach einer Ausführungsform, dass das Fahrzeug innerhalb einer digitalen Karte des Parkplatzes lokalisiert wird, wobei die digitale Karte eine jeweilige Position der WLAN-Basisstationen innerhalb des Parkplatzes angeben. Somit sind also die Positionen der WLAN-Basisstationen innerhalb des Parkplatzes bekannt. Wenn dann eine Position des Fahrzeugs relativ zu WLAN-Basisstationen ermittelt wird, wird somit hierüber eine Position des Fahrzeugs innerhalb des Parkplatzes ermittelt.

Ein Parkplatz im Sinne der vorliegenden Erfindung dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Die Parkstände oder Stellplätze sind also Parkpositionen, an welchen Fahrzeuge parken können. Der Parkplatz ist nach einer Ausführungsform als ein Parkhaus gebildet. Der Parkplatz ist nach einer weiteren Ausführungsform als eine Garage, auch Parkgarage genannt, ausgebildet. Der Parkplatz umfasst nach einer Ausführungsform überdachte respektive nicht überdachte (also unbedachte) Parkflächen oder Parkpositionen.

Nach einer Ausführungsform ist das Fahrzeug ein Kraftfahrzeug, zum Beispiel ein Personenkraftwagen (PKW) oder ein Lastkraftwagen (LKW). Zum Beispiel ist das Kraftfahrzeug ein zweirädriges Kraftfahrzeug, zum Beispiel ein Motorrad.

Nach einer Ausführungsform ist vorgesehen, dass das System zum Lokalisieren eines sich innerhalb eines Parkplatzes befindenden Fahrzeugs ausgebildet oder eingerichtet ist, das Verfahren zum Lokalisieren eines sich innerhalb eines Parkplatzes befindenden Fahrzeugs aus- oder durchzuführen.

Technische Funktionalitäten betreffend das System ergeben sich analog aus entsprechenden technischen Funktionalitäten des Verfahrens und umgekehrt. Das heißt, dass Ausführungen, die im Zusammenhang mit dem System gemacht sind, analog für das Verfahren gelten und umgekehrt.

Nach einer Ausführungsform ist vorgesehen, dass basierend auf der Lokalisierung des Fahrzeugs überprüft wird, ob eine Ist-Position des Fahrzeugs einer vorbestimmten Soll-Position innerhalb des Parkplatzes entspricht.

Dadurch kann insbesondere der technische Vorteil bewirkt werden, dass effizient überprüft werden kann, ob sich das Fahrzeug an einer vorbestimmten Soll-Position innerhalb des Parkplatzes befindet.

In einer anderen Ausführungsform ist vorgesehen, dass basierend auf der Lokalisierung des Fahrzeugs überprüft wird, ob eine Ist-Position des Fahrzeugs einer vorbestimmten Soll-Position innerhalb des Parkplatzes entspricht, wobei, wenn die Ist-Position verschieden von der Soll-Position ist, eine von der Soll-Position zu einer sich innerhalb des Parkplatzes befindenden Zielposition führende ermittelte Route an die Ist-Position des Fahrzeugs angepasst wird, so dass das Fahrzeug basierend auf der angepassten Route führerlos von der Ist-Position zur Zielposition geführt wird.

Dadurch wird insbesondere der technische Vorteil bewirkt, dass effizient überprüft werden kann, ob eine Anpassung der ermittelten Route notwendig ist oder nicht. Denn eine ermittelte Route, die gültig ist, um das Fahrzeug von der Soll-Position zur Zielposition zu führen, ist nicht mehr in der Regel gültig, um das Fahrzeug von der Ist-Position zur Zielposition zu führen. Denn die ermittelte Route geht schließlich davon aus, dass sich das Fahrzeug an der Soll-Position befindet. Sofern also keine Anpassung vorgenommen würde, könnte das Fahrzeug zum Beispiel mit Hindernissen kollidieren. Dadurch also, dass die ermittelte Route an die Ist-Position angepasst wird, kann das Fahrzeug effizient führerlos von der Ist-Position zur Zielposition geführt werden. Insbesondere wird dadurch der technische Vorteil bewirkt, dass Kollisionen des Fahrzeugs mit Objekten innerhalb des Parkplatzes verhindert werden können.

Wenn die Überprüfung ergeben hat, dass die Ist-Position der Soll-Position entspricht, so ist keine Anpassung vorgesehen.

Dass das Fahrzeug führerlos geführt wird, umfasst insbesondere den Fall, dass das Fahrzeug ferngesteuert geführt wird. Ein Fernsteuern des Fahrzeugs umfasst insbesondere, dass Fernsteuerungsbefehle an das Fahrzeug gesendet werden. Dies zum Beispiel über das WLAN-Kommunikationsnetzwerk und/oder über ein Mobilfunknetzwerk.

Dass das Fahrzeug führerlos von der Ist-Position zur Zielposition geführt wird, umfasst insbesondere den Fall, dass das Fahrzeug autonom, also selbständig, zur Zielposition fährt. Das heißt also, dass zum Beispiel dem Fahrzeug die angepasste Route sowie die Zielposition übermittelt werden, so dass das Fahrzeug basierend hierauf selbständig, also autonom, zur Zielposition fährt. Insbesondere ist vorgesehen, dass dem Fahrzeug eine digitale Karte des Parkplatzes zur Verfügung gestellt wird, so dass das Fahrzeug basierend auf der digitalen Karte autonom zur Zielposition fährt respektive fahren kann.

Autonom im Sinne der vorliegenden Erfindung bedeutet insbesondere, dass das Fahrzeug selbstständig, also ohne einen Eingriff eines Fahrers, auf dem Parkplatz navigiert oder fährt oder geführt wird. Das Fahrzeug fährt also selbstständig auf dem Parkplatz, ohne dass ein Fahrer hierfür das Fahrzeug steuern müsste. Ein Führen umfasst insbesondere eine Quer- und/oder eine Längsführung des Fahrzeugs. Ein solch autonomes fahrendes Fahrzeug, das automatisch ein- und ausparken kann, wird beispielsweise als ein AVP-Fahrzeug bezeichnet. AVP steht für "automated valet parking" und kann mit "automatischer Parkvorgang" übersetzt werden. Fahrzeuge, die diese AVP-Funktionalität nicht aufweisen, werden beispielsweise als normale Fahrzeuge bezeichnet.

Nach einer Ausführungsform ist vorgesehen, dass die Soll-Position einer Abgabeposition innerhalb des Parkplatzes entspricht, an welcher ein Fahrzeug für eine Durchführung eines automatischen Parkvorgangs abgestellt werden soll.

Dadurch wird insbesondere der technische Vorteil bewirkt, dass effizient sichergestellt werden kann, dass die Durchführung des automatischen Parkvorgangs korrekt begonnen wird. Insbesondere kann dadurch der technische Vorteil bewirkt werden, dass ein automatischer Parkvorgang effizient durchgeführt werden kann.

Ein automatischer Parkvorgang umfasst, dass das Fahrzeug von der Abgabeposition zu einer Parkposition führer- oder fahrerlos geführt wird. Der automatische Parkvorgang umfasst, dass das Fahrzeug von der Parkposition zu einer Abholposition fahrer- oder führerlos geführt wird. Die Abholposition entspricht zum Beispiel der Abgabeposition.

Eine Abgabeposition bezeichnet eine Position innerhalb des Parkplatzes, an welcher ein Fahrzeug für die Durchführung eines automatischen Parkvorgangs von einem Fahrer abgestellt werden soll. Die Abholposition bezeichnet eine Position innerhalb des Parkplatzes, an welcher ein Fahrer sein Fahrzeug nach der Durchführung des automatischen Parkvorgangs wieder abholen soll. Eine Abgabeposition umfasst nach einer Ausführungsform mehrere Stellplätze oder mehrere Parkstände.

Nach einer Ausführungsform ist vorgesehen, dass einige der mehreren WLAN-Basisstationen derart innerhalb des Parkplatzes angeordnet sind, dass ein gemeinsamer Radiosignals-Empfangsbereich, der aus den jeweiligen Radiosignals-Empfangsbereichen der WLAN-Basisstationen gebildet ist, die Soll-Position und einen vorbestimmten Bereich von 5 m bis 10 m um die Soll-Position herum umfasst. Die Soll-Position entspricht zum Beispiel der Abgabeposition.

Dadurch wird insbesondere der technische Vorteil bewirkt, dass die Soll-Position effizient überwacht werden kann.

Gemäß einer weiteren Ausführungsform ist vorgesehen, dass einige der mehreren WLAN- Basisstationen derart innerhalb des Parkplatzes angeordnet sind, dass ein gemeinsamer Radiosignals-Empfangsbereich, der aus den jeweiligen Radiosignals-Empfangsbereichen der WLAN-Basisstationen gebildet ist, alle für Fahrzeuge vorgesehene Fahrwege umfasst.

Dadurch wird insbesondere der technische Vorteil bewirkt, dass die für Fahrzeuge vorgesehenen Fahrwege effizient überwacht werden können. Das heißt also, dass Fahrzeuge, die sich auf diesen Fahrwegen befinden, effizient lokalisiert werden können.

Nach einer Ausführungsform ist vorgesehen, dass zumindest einige, beispielsweise alle WLAN-Basisstationen, als WLAN-Router ausgebildet sind.

Nach einer Ausführungsform ist vorgesehen, dass das Fahrzeug mittels eines individuellen Merkmals des Radiosignals identifiziert wird. Radiosignale weisen in der Regel individuelle Merkmale auf, die sie von anderen Radiosignalen unterscheiden. Diese individuellen Merkmale resultieren zum Beispiel aus unterschiedlichen Radiosendern. Zum Beispiel unterscheiden sich die Radiosignale in ihrer Anstiegszeit ("rise time"). Im Englischen wird der Begriff "RF Fingerprinting" für diese Art der Identifikation verwendet.

Dadurch wird insbesondere der technische Vorteil bewirkt, dass ein empfangenes Radiosignal einem bestimmten Fahrzeug eindeutig zugeordnet werden kann. Dies vereinfacht eine Lokalisierung des Fahrzeugs. Dies insbesondere dann, wenn eine Vielzahl von Fahrzeugen gleichzeitig lokalisiert werden müssen. So kann also das Fahrzeug auf einer Vielzahl von Fahrzeugen eindeutig identifiziert werden.

Die Erfindung wird im Folgenden anhand von bevorzugten Ausführungsbeispielen näher erläutert, hierbei zeigen:
- Fig. 1: ein Ablaufdiagramm eines Verfahren zum Lokalisieren eines sich innerhalb eines Parkplatzes befindenden Fahrzeugs,
- Fig. 2: ein System zum Lokalisieren eines sich innerhalb eines Parkplatzes befindenden Fahrzeugs und
- Fig. 3: einen Parkplatz.

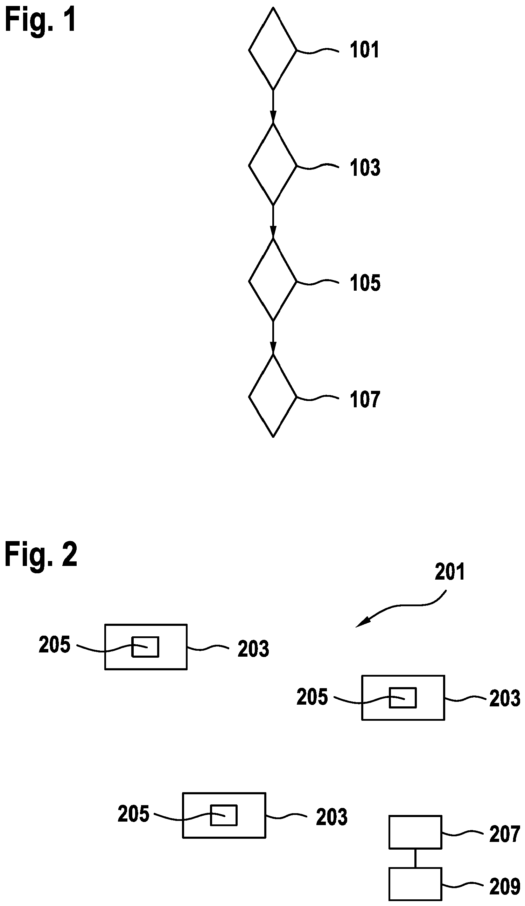

Fig. 1 zeigt ein Ablaufdiagramm eines Verfahrens zum Lokalisieren eines sich innerhalb eines Parkplatzes befindenden Fahrzeugs unter Verwendung von mehreren jeweils ein Antennenarray umfassende WLAN-Basisstationen, wobei das Fahrzeug eine Kommunikationsschnittstelle zur Kommunikation mit den WLAN-Basisstationen über ein drahtloses WLAN-Kommunikationsnetzwerk umfasst.

Das Verfahren umfasst die folgenden Schritte:
- Empfangen 101 mittels des jeweiligen Antennenarrays eines mittels der Kommunikationsschnittstelle des Fahrzeugs über das drahtlose Kommunikationsnetzwerk gesendeten Radiosignals,
- Ermitteln 103 eines jeweiligen Einfallswinkels des jeweiligen empfangenen Radiosignals relativ zu einer jeweiligen Normalen des Antennenarrays,
- Ermitteln 105 einer Signalintensität des jeweiligen empfangenen Radio-Signals,
- Durchführen 107 einer Triangulation unter Verwendung der ermittelten Einfallswinkel und der ermittelten Signalintensitäten, um das Fahrzeug innerhalb des Parkplatzes zu lokalisieren.

Basierend auf der Triangulation wird das Fahrzeug innerhalb des Parkplatzes lokalisiert.

Fig. 2 zeigt ein System 201 zum Lokalisieren eines sich innerhalb eines Parkplatzes befindenden Fahrzeugs, wobei das Fahrzeug eine Kommunikationsschnittstelle zur Kommunikation mit WLAN-Basisstationen über ein drahtloses WLAN-Kommunikationsnetzwerk umfasst.

Das System 201 umfasst mehrere WLAN-Basisstationen 203. Die mehreren WLAN-Basisstationen 203 umfassen jeweils ein Antennenarray 205 zum Empfangen eines mittels der Kommunikationsschnittstelle des Fahrzeugs über das drahtlose WLAN-Kommunikationsnetzwerk gesendeten Radiosignals.

Das System 201 umfasst eine Ermittlungseinrichtung 207 zum Ermitteln eines Einfallswinkels des jeweiligen empfangenen Radiosignals relativ zu einer jeweiligen Normalen des Antennenarrays 205 und zum Ermitteln einer Signalintensität des jeweiligen empfangenen Radiosignals. Die Ermittlungseinrichtung ist zum Beispiel in einer der WLAN-Basisstationen 203 integriert. Zum Beispiel ist vorgesehen, dass die mehreren WLAN-Basisstationen jeweils eine eigene Ermittlungseinrichtung 207 umfassen.

Das System 201 umfasst eine Lokalisierungseinrichtung 209 zum Durchführen einer Triangulation unter Verwendung der ermittelten Einfallswinkel und der ermittelten Signalintensitäten, um das Fahrzeug innerhalb des Parkplatzes zu lokalisieren.

Zum Beispiel ist vorgesehen, dass die Lokalisierungseinrichtung 209 in einer der WLAN-Basisstationen 203 integriert ist. Insbesondere ist vorgesehen, dass die mehreren WLAN-Basisstationen 203 jeweils eine eigene Lokalisierungseinrichtung 209 umfassen. In diesem Fall ist insbesondere vorgesehen, dass die jeweiligen ermittelten Einfallswinkel und die jeweiligen ermittelten Signalintensitäten jeder der WLAN-Basisstationen 203 zur Verfügung gestellt werden, so dass jede WLAN-Basisstation 203 selbst das Fahrzeug innerhalb des Parkplatzes lokalisiert respektive lokalisieren kann.

Das Antennenarray 205 ist insbesondere ausgebildet WLAN-Radiosignale an die Kommunikationsschnittstelle des Fahrzeugs über das WLAN-Kommunikationsnetzwerk zu senden. Somit ist also ein WLAN-Kommunikationskanal zwischen dem Fahrzeug und jeweils den WLAN-Basisstationen gebildet.

Ein Antennenarray im Sinne der vorliegenden Erfindung umfasst insbesondere mehrere Antennen.

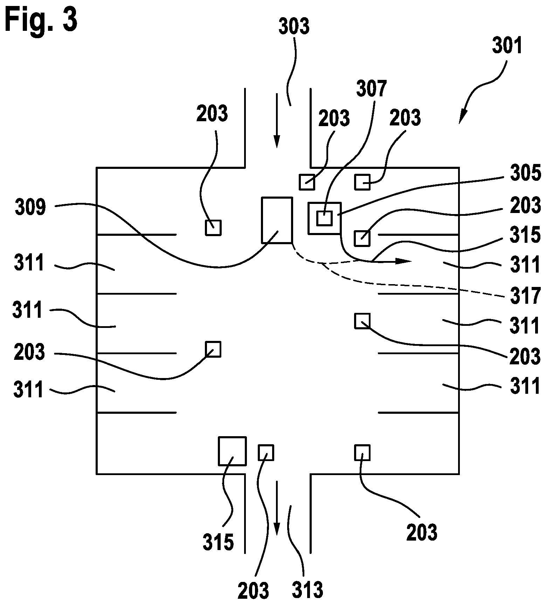

Fig. 3 zeigt einen Parkplatz 301 für Fahrzeuge.

Der Parkplatz 301 umfasst eine Einfahrt 303 sowie eine der Einfahrt 303 gegenüberliegende Ausfahrt 313. innerhalb des Parkplatzes 301 und in Einfahrtrichtung der Einfahrt 303 nachgeordnet ist eine Abgabeposition 305 vorgesehen, an welcher Fahrzeuge für die Durchführung eines automatischen Parkvorgangs innerhalb des Parkplatzes 301 abgestellt werden sollen. Der Parkplatz 301 umfasst mehrere Parkpositionen 311.

in einer Ausführungsform umfasst die Abgabeposition 305 mehrere Stellplätze oder mehrere Parkstände.

Auf der Abgabeposition 305 ist bereits ein Fahrzeug 307 abgestellt. Doch dieses Fahrzeug 307 soll momentan keinen automatischen Parkvorgang durchführen. Dass das Fahrzeug 307 dennoch auf der Abgabeposition 305 abgestellt wurde, kann zum Beispiel daran liegen, dass der Fahrer des Fahrzeugs 307 zu faul war, das Fahrzeug 307 an einer der Parkpositionen 311 des Parkplatzes 301 abzustellen. Er hat also aus Bequemlichkeitsgründen sein Fahrzeug 307 an der Abgabeposition 305 geparkt.

Das Fahrzeug 309 hingegen ist für die Durchführung eines automatischen Parkvorgangs vorgesehen. Normalerweise müsste der Fahrer des Fahrzeugs 309 dann sein Fahrzeug auf oder an der Abgabeposition 305 abstellen, damit von dieser Position aus der automatische Parkvorgang durchgeführt werden respektive starten kann.

Doch diese Abgabeposition 305 ist nun durch das Fahrzeug 307 blockiert. Dem Fahrer des Fahrzeugs 309 bleibt somit nichts anderes übrig, als sein Fahrzeug neben der Abgabeposition 305 abzustellen.

Üblicherweise geht ein Parkplatzverwaltungssystem zum Betreiben des Parkplatzes 301 davon aus, dass für die Durchführung des automatischen Parkvorgangs ein Fahrzeug auf der Abgabeposition 305 abgestellt ist. Insofern berechnet dann ein solches Parkplatzverwaltungssystem eine Route für die Durchführung des automatischen Parkvorgangs zu einer der Parkpositionen 311 beginnend ab der Abgabeposition 305. Diese Route ist hier exemplarisch mittels eines Pfeils mit dem Bezugszeichen 315 gekennzeichnet.

Wenn nun diese Route 315 ohne Anpassung verwendet werden würde, um das Fahrzeug 309, welches nicht wie vorgesehen auf der Abgabeposition 305 abgestellt ist, zu der für das Fahrzeug 309 vorgesehen Parkposition 311 fahrerlos oder führerlos zu führen, so würde das Fahrzeug 309 nicht die für ihn vorgesehene Parkposition 311 erreichen. Es ist als wichtig, dass vor Beginn eines automatischen Parkvorgangs ermittelt wird, wo sich das Fahrzeug 309 innerhalb des Parkplatzes befindet.

Um nun effizient das Fahrzeug 309 lokalisieren zu können, insbesondere um feststellen oder überprüfen zu können, ob das Fahrzeug 309 an der oder auf der Abgabeposition 305 als Soll-Position abgestellt ist, ist das System 201 gemäß Fig. 2 vorgesehen, welches gemäß dieser Ausführungsform vom Parkplatz 301 umfasst ist. Der Übersicht halber sind lediglich in vereinfachter Darstellung die WLAN-Basisstationen 203 ohne ihr Antennenarray 205 eingezeichnet.

Die mehren WLAN-Basisstationen 203 sind innerhalb des Parkplatzes 301 angeordnet. Insbesondere sind bevorzugterweise mehrere der WLAN-Basisstationen um die Abgabeposition 305 angeordnet, so dass die mehreren WLAN-Basisstationen 203 diesen Bereich effizient überwachen können.

Basierend auf dem System 201 kann also ermittelt werden, ob sich das Fahrzeug 309 auf der Abgabeposition 305 befindet oder nicht. Es wird also insbesondere die Ist-Position des Fahrzeugs 309 innerhalb des Parkplatzes 301 ermittelt. Es wird dann überprüft, ob diese Ist-Position der Soll-Position, also der Abgabeposition 305, entspricht.

Vorliegend ist dies nicht der Fall, so dass eine angepasste Route zur Parkposition 311 ermittelt werden muss. Diese angepasste Route ist gestrichelt dargestellt und mit dem Bezugszeichen 317 versehen. Wie die Darstellung gemäß Fig. 3 zeigt, geht diese angepasste Route 317 dann in die ermittelte Route 315 über, so dass nur der Teil der angepassten Route 317 gestrichelt dargestellt ist, der sich von der ursprünglich ermittelten Route 315 unterscheidet.

Im Rahmen des automatischen Parkvorgangs wird also das Fahrzeug von seiner Ist-Position basierend auf der angepassten Route 317 führer- oder fahrerlos zur Parkposition 311 geführt. Dort wird das Fahrzeug geparkt. Dies auch fahrer- oder führerlos.

Nach Ablauf einer vorbestimmten Parkdauer oder zum Beispiel nach Anforderung seitens des Fahrers, wird das Fahrzeug 309 dann von dieser Parkposition 311 zur einer Abholposition 315 fahrer- oder führerlos geführt, an welcher der Fahrer sein Fahrzeug wieder abholen kann. Diese Abholposition 315 befindet sich in Ausfahrtrichtung unmittelbar vor der Ausfahrt 313.

in einer nicht gezeigten Ausführungsform ist vorgesehen, dass der AVP-Vorgang (automatischer Parkvorgang) nicht gestartet wird, wenn bestimmt wird, dass das Fahrzeug 309 nicht auf der Abgabeposition 305 steht oder abgestellt ist.

In einer nicht gezeigten Ausführungsform ist vorgesehen, dass das Fahrzeug 309 nach dem Parken zurück zur Abgabeposition 305 fahrer- oder führerlos geführt wird. In diesem Fall entspricht dann die Abgabeposition 305 einer Abholposition.

Wie Fig. 3 zeigt, sind die mehreren WLAN-Basisstationen 203 derart innerhalb des Parkplatzes 301 angeordnet, dass diese sämtliche für Fahrzeuge vorgesehene Fahrwege sensorisch erfassen können, um effizient die sich innerhalb des Parkplatzes bewegenden Fahrzeuge lokalisieren zu können.

Die Erfindung umfasst also insbesondere und unter anderem den Gedanken, ein technisches Konzept bereitzustellen, basierend auf welchem eine Lokalisierung eines Fahrzeugs im Rahmen eines automatischen Parkvorgangs effizient verbessert werden kann. Der erfindungsgemäße Grundgedanke ist insbesondere darin zu sehen, zwei Lokalisierungstechniken zu verwenden: die Angle of Arrival-Lokalisierungstechnik und die Received Signal Strength-Lokalisierungstechnik. Durch die Verwendung von zwei Lokalisierungstechniken kann also in vorteilhafter Weise eine jeweilige Ungenauigkeit der einzelnen Lokalisierungstechniken kompensiert und somit in der Summe verbessert werden.

Nach einer Ausführungsform ist vorgesehen, dass das Konzept insbesondere bei einer sogenannten Erstdetektion inklusive einer Positionsbestimmung an der Abgabeposition oder in einem Bereich um die Abgabeposition verwendet wird, dies also insbesondere vor einem Start oder Beginn des automatischen Parkvorgangs.

Es ist somit nach einer Ausführungsform vorgesehen, dass auf oder innerhalb des Parkplatzes, zum Beispiel im Parkhaus, mehrere WLAN-Basisstationen verwendet werden, die insbesondere entlang der für die Fahrzeuge vorgesehenen Fahrwege angeordnet sind.

Nach einer Ausführungsform ist vorgesehen, dass bei der Erstdetektion überprüft wird, ob sich das für einen automatischen Parkvorgang vorgesehene Fahrzeug, welches sich zum Beispiel im Vorfeld für einen solchen automatischen Parkvorgang angemeldet haben kann, wirklich auf oder an der Abgabeposition befindet. Die Abgabeposition kann auch als eine Dropzone bezeichnet werden. Bevorzugterweise werden mehrere der WLAN-Basisstationen um die Dropzone angeordnet, um effizient Fahrzeuge innerhalb eines Dropzonenbereichs lokalisieren zu können.

Das erfindungsgemäße Konzept wird insbesondere zur Unterstützung von bereits vorhandenen Lokalisierungsverfahren verwendet. Zum Beispiel können andere Lokalisierungsverfahren auf einer Erfassung mittels einer Umfeldsensorik, die sich innerhalb des Parkplatzes befindet, basieren. Zum Beispiel kann eine Umfeldsensorik Videokameras umfassen, basierend auf welchen Fahrzeuge innerhalb des Parkplatzes lokalisiert werden können.

Weitere Lokalisierungsverfahren basieren zum Beispiel auf Lokalisierungssystemen, die sich innerhalb der Fahrzeuge befinden. Zum Beispiel befinden sich innerhalb der Fahrzeuge Videokameras, die das jeweilige Umfeld der Fahrzeuge erfassen und somit eine Lokalisierung des Fahrzeugs innerhalb des Parkplatzes ermöglichen.

Insbesondere basieren andere Lokalisierungsverfahren oder -techniken auf einer Kombination der beiden vorgestehend genannten Lokalisierungstechniken: also eine Kombination aus einer externen Umfeldsensorik (Umfeldsensorik innerhalb des Parkplatzes) und einer fahrzeuginternen Umfeldsensorik (zum Beispiel fahrzeuginterne Kameras).

Insbesondere wird dadurch der Vorteil erreicht, dass eine robuste Lokalisierung von Fahrzeugen bewirkt werden kann.

## Patentansprüche

1. Verfahren zum Lokalisieren eines sich innerhalb eines Parkplatzes (301) befindenden Fahrzeugs (309) unter Verwendung von mehreren jeweils ein Antennenarray (205) umfassende WLAN-Basisstationen (203), wobei das Fahrzeug (309) eine Kommunikationsschnittstelle zur Kommunikation mit den WLAN-Basisstationen (203) über ein drahtloses WLAN-Kommunikationsnetzwerk umfasst, wobei das Verfahren die folgenden Schritte umfasst:
- Empfangen (101) mittels des jeweiligen Antennenarrays (205) eines mittels der Kommunikationsschnittstelle des Fahrzeugs (309) über das drahtlose Kommunikationsnetzwerk gesendeten Radiosignals,
- Ermitteln (103) eines jeweiligen Einfallswinkels des jeweiligen empfangenen Radiosignals relativ zu einer jeweiligen Normalen des Antennenarrays,
- Ermitteln (105) einer Signalintensität des jeweiligen empfangenen Radio-Signals,
- Durchführen (107) einer Triangulation unter Verwendung der ermittelten Einfallswinkel und der ermittelten Signalintensitäten, um das Fahrzeug (309) innerhalb des Parkplatzes (301) zu lokalisieren.

2. Verfahren nach Anspruch 1, wobei basierend auf der Lokalisierung des Fahrzeugs (309) überprüft wird, ob eine Ist-Position des Fahrzeugs (309) einer vorbestimmten Soll-Position innerhalb des Parkplatzes (301) entspricht, wobei, wenn die Ist-Position verschieden von der Soll-Position ist, eine von der Soll-Position zu einer sich innerhalb des Parkplatzes (301) befindenden Zielposition führende ermittelte Route an die Ist-Position des Fahrzeugs (309) angepasst wird, so dass das Fahrzeug (309) basierend auf der angepassten Route führerlos von der Ist-Position zur Zielposition geführt wird.

3. Verfahren nach Anspruch 2, wobei die Soll-Position einer Abgabeposition (305) innerhalb des Parkplatzes (301) entspricht, an welcher ein Fahrzeug (309) für eine Durchführung eines automatischen Parkvorgangs abgestellt werden soll.

4. Verfahren nach Anspruch 2 oder 3, wobei einige der mehreren WLAN-Basisstationen (203) derart innerhalb des Parkplatzes (301) angeordnet sind, dass ein gemeinsamer Radiosignals-Empfangsbereich, der aus den jeweiligen Radiosignals-Empfangsbereichen der WLAN-Basisstationen (203) gebildet ist, die Soll-Position und einen vorbestimmten Bereich von 5 m bis 10 m um die Soll-Position herum umfasst.

5. Verfahren nach einem der vorherigen Ansprüche, wobei einige der mehreren WLAN- Basisstationen derart innerhalb des Parkplatzes (301) angeordnet sind, dass ein gemeinsamer Radiosignals-Empfangsbereich, der aus den jeweiligen Radiosignals-Empfangsbereichen der WLAN-Basisstationen (203) gebildet ist, alle für Fahrzeuge (309) vorgesehene Fahrwege umfasst.

6. Verfahren nach einem der vorherigen Ansprüche, wobei das Fahrzeug mittels eines individuellen Merkmals des Radiosignals identifiziert wird.

7. System (201) zum Lokalisieren eines sich innerhalb eines Parkplatzes (301) befindenden Fahrzeugs (309), wobei das Fahrzeug (309) eine Kommunikationsschnittstelle zur Kommunikation mit WLAN-Basisstationen (203) über ein drahtloses WLAN-Kommunikationsnetzwerk umfasst, umfassend:
- mehrere jeweils ein Antennenarray (205) umfassende WLAN-Basisstationen (203) zum Empfangen mittels des jeweiligen Antennenarrays (205) eines mittels der Kommunikationsschnittstelle des Fahrzeugs (309) über das drahtlose WLAN-Kommunikationsnetzwerk gesendeten Radiosignals,
- eine Ermittlungseinrichtung (207) zum Ermitteln eines Einfallwinkels des jeweiligen empfangenen Radiosignals relativ einer jeweiligen Normalen des Antennenarrays (205) und zum Ermitteln einer Signalintensität des jeweiligen empfangenen Radiosignals und
- eine Lokalisierungseinrichtung (209) zum Durchführen einer Triangulation unter Verwendung der ermittelten Einfallswinkel und der ermittelten Signalintensitäten, um das Fahrzeug (309) innerhalb des Parkplatzes (301) zu lokalisieren.

8. Parkplatz (301) für Fahrzeuge (309), umfassend das System (201) nach Anspruch 7.

9. Computerprogramm, umfassend Programmcode zur Durchführung des Verfahrens nach einem der Ansprüche 1 bis 6, wenn das Computerprogram auf einem Computer ausgeführt wird.

## Claims

1. Method for locating a vehicle (309) situated within a parking area (301) using a plurality of WLAN base stations (203) each comprising an antenna array (205), wherein the vehicle (309) comprises a communication interface for communicating with the WLAN base stations (203) via a wireless WLAN communication network, wherein the method comprises the following steps of:
- receiving (101), by means of the respective antenna array (205), a radio signal transmitted by means of the communication interface of the vehicle (309) via the wireless communication network,
- determining (103) a respective angle of incidence of the respective received radio signal relative to a respective normal of the antenna array,
- determining (105) a signal intensity of the respective received radio signal,
- carrying out (107) a triangulation using the determined angles of incidence and the determined signal intensities in order to locate the vehicle (309) within the parking area (301).

2. Method according to Claim 1, wherein a check is carried out, on the basis of the location of the vehicle (309), in order to determine whether an actual position of the vehicle (309) corresponds to a predetermined desired position within the parking area (301), wherein, if the actual position differs from the desired position, a determined route leading from the desired position to a target position situated within the parking area (301) is adapted to the actual position of the vehicle (309), with the result that the vehicle (309) is guided in a driverless manner from the actual position to the target position on the basis of the adapted route.

3. Method according to Claim 2, wherein the desired position corresponds to a drop position (305) within the parking area (301), at which a vehicle (309) is intended to be dropped off for the purpose of carrying out an automatic parking process.

4. Method according to Claim 2 or 3, wherein some of the plurality of WLAN base stations (203) are arranged within the parking area (301) in such a manner that a common radio signal reception range, which is formed from the respective radio signal reception ranges of the WLAN base stations (203), comprises the desired position and a predetermined area of 5 m to 10 m around the desired position.

5. Method according to one of the preceding claims, wherein some of the plurality of WLAN base stations are arranged within the parking area (301) in such a manner that a common radio signal reception range, which is formed from the respective radio signal reception ranges of the WLAN base stations (203), comprises all routes intended for vehicles (309).

6. Method according to one of the preceding claims, wherein the vehicle is identified by means of an individual feature of the radio signal.

7. System (201) for locating a vehicle (309) situated within a parking area (301), wherein the vehicle (309) comprises a communication interface for communicating with WLAN base stations (203) via a wireless WLAN communication network, comprising:
- a plurality of WLAN base stations (203), each comprising an antenna array (205), for receiving, by means of the respective antenna array (205), a radio signal transmitted by means of the communication interface of the vehicle (309) via the wireless WLAN communication network,
- a determination device (207) for determining an angle of incidence of the respective received radio signal relative to a respective normal of the antenna array (205) and for determining a signal intensity of the respective received radio signal, and
- a locating device (209) for carrying out a triangulation using the determined angles of incidence and the determined signal intensities in order to locate the vehicle (309) within the parking area (301).

8. Parking area (301) for vehicles (309), comprising the system (201) according to Claim 7.

9. Computer program comprising program code for carrying out the method according to one of Claims 1 to 6 when the computer program is executed on a computer.

## Revendications

1. Procédé permettant de localiser un véhicule (309) se trouvant à l'intérieur d'un parc de stationnement (301) en utilisant plusieurs stations de base WLAN (203) comprenant respectivement un réseau d'antennes (205), dans lequel le véhicule (309) comprend une interface de communication pour communiquer avec les stations de base WLAN (203) par l'intermédiaire d'un réseau de communication WLAN sans fil, le procédé comprenant les étapes suivantes consistant à :
- recevoir (101) au moyen du réseau d'antennes (205) respectif un signal radio émis au moyen de l'interface de communication du véhicule (309) par l'intermédiaire du réseau de communication sans fil,
- déterminer (103) un angle d'incidence respectif du signal radio reçu respectif par rapport à une normale respective du réseau d'antennes,
- déterminer (105) une intensité de signal du signal radio reçu respectif,
- effectuer (107) une triangulation en utilisant l'angle d'incidence déterminé et les intensités de signal déterminées pour localiser le véhicule (309) à l'intérieur du parc de stationnement (301).

2. Procédé selon la revendication 1, dans lequel, sur la base de la localisation du véhicule (309), on vérifie si une position réelle du véhicule (309) correspond à une position de consigne prédéterminée à l'intérieur du parc de stationnement (301), dans lequel, si la position réelle est différente de la position de consigne, un itinéraire déterminé, allant de la position de consigne à une position cible se trouvant à l'intérieur du parc de stationnement (301), est adapté à la position réelle du véhicule (309) de sorte que le véhicule (309) est guidé sans conducteur de la position réelle à la position cible sur la base de l'itinéraire adapté.

3. Procédé selon la revendication 2, dans lequel la position de consigne correspond à une position de remise (305) à l'intérieur du parc de stationnement (301) à laquelle un véhicule (309) doit être garé pour effectuer une opération de stationnement automatique.

4. Procédé selon la revendication 2 ou 3, dans lequel certaines des plusieurs stations de base WLAN (203) sont disposées à l'intérieur du parc de stationnement (301) de telle sorte qu'une zone de réception de signal radio commune, qui est composée des zones de réception de signal radio respectives des stations de base WLAN (203), comprend la position de consigne et une zone prédéterminée de 5 m à 10 m autour de la position de consigne.

5. Procédé selon l'une quelconque des revendications précédentes, dans lequel certaines des plusieurs stations de base WLAN sont disposées à l'intérieur du parc de stationnement (301) de telle sorte qu'une zone de réception de signal radio commune qui est composée des zones de réception de signal radio respectives des stations de base WLAN (203) comprend tous les trajets prévus pour des véhicules (309).

6. Procédé selon l'une quelconque des revendications précédentes, dans lequel le véhicule est identifié au moyen d'une particularité individuelle du signal radio.

7. Système (201) permettant de localiser un véhicule (309) se trouvant à l'intérieur d'un parc de stationnement (301), dans lequel le véhicule (309) comprend une interface de communication pour communiquer avec des stations de base WLAN (203) par l'intermédiaire d'un réseau de communication WLAN sans fil, comprenant :
- plusieurs stations de base WLAN (203) comprenant respectivement un réseau d'antennes (205), pour recevoir au moyen du réseau d'antennes (205) respectif un signal radio émis au moyen de l'interface de communication du véhicule (309) par l'intermédiaire du réseau de communication WLAN sans fil,
- un dispositif de détermination (207) pour déterminer un angle d'incidence du signal radio reçu respectif par rapport à une normale respective du réseau d'antennes (205) et pour déterminer une intensité de signal du signal radio reçu respectif, et
- un dispositif de localisation (209) pour effectuer une triangulation en utilisant l'angle d'incidence déterminé et les intensités de signal déterminées pour localiser le véhicule (309) à l'intérieur du parc de stationnement (301).

8. Parc de stationnement (301) pour véhicules (309), comprenant le système (201) selon la revendication 7.

9. Programme informatique, comprenant du code programme pour mettre en oeuvre le procédé selon l'une quelconque des revendications 1 à 6 lorsque le programme informatique est exécuté sur un ordinateur.
